(19) Europäisches Patentamt European Patent Office Office européen des brevets

(11) **EP 4 570 938 A1**

(12) **EUROPEAN PATENT APPLICATION**
published in accordance with Art. 153(4) EPC

(43) Date of publication:
**18.06.2025 Bulletin 2025/25**

(21) Application number: 24792669.4

(22) Date of filing: **16.04.2024**

(51) International Patent Classification (IPC):
**C22C 21/06** (2006.01)    **C22F 1/00** (2006.01)
**C22F 1/047** (2006.01)

(52) Cooperative Patent Classification (CPC):
Y02E 60/10

(86) International application number:
**PCT/JP2024/015128**

(87) International publication number:
**WO 2024/219395 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023067405**

(71) Applicant: UACJ Corporation
Chiyoda-ku
Tokyo 100-0004 (JP)

(72) Inventors:
• **YOSHIDA, Tomonori**
  **Tokyo 100-0004 (JP)**
• **IKEDA, Yukimasa**
  **Tokyo 100-0004 (JP)**
• **KUDO, Tomoyuki**
  **Tokyo 100-0004 (JP)**

(74) Representative: **RavensPAT Patentanwälte Partnerschaft mbB**
**Großtobeler Straße 39**
**88276 Berg / Ravensburg (DE)**

(54) **ALUMINUM ALLOY SHEET FOR TAB**

(57) One aspect of the present disclosure provides an aluminum alloy sheet for a tab including 0.20 mass% or more and 0.60 mass% or less of Si, 0.30 mass% or more and 0.70 mass% or less of Fe, 0.11 mass% or more and 0.40 mass% or less of Cu, 0.7 mass% or more and 1.2 mass% or less of Mn, and 1.1 mass% or more and 3.0 mass% or less of Mg. A sheet thickness t (mm) and a tensile strength $\sigma_{B\_0°}$ (MPa) in a 0-degree direction with respect to a rolling direction satisfy the following formula (1). In an L-ST cross-section, a percentage of a total area of $Mg_2Si$ particles having an area of 0.3 $\mu m^2$ or more is 0.2% or less.

$$(2.7 \times t - 0.45) \times \sigma_{B\_0°} \geq 67 \quad \cdots \quad (1)$$

FIG. 1

EP 4 570 938 A1

**Description**

CROSS-REFERENCE TO RELATED APPLICATION

This international application claims the benefit of Japanese Patent Application No. 2023-067405 filed on April 17, 2023 with the Japan Patent Office, the disclosure of which is incorporated herein in its entirety by reference.

TECHNICAL FIELD

The present disclosure relates to an aluminum alloy sheet for a tab.

BACKGROUND ART

In recent years, increasing environmental awareness calls for an aluminum alloy sheet that causes reduced production of $CO_2$ emissions in its production process. In the production process of aluminum, blending of primary aluminum in a casting process affects greatly and indirectly on the $CO_2$ emissions.
Production of the primary aluminum consumes a large amount of electricity in a refining process, leading to a large amount of the $CO_2$ emissions. Thus, reduction of a blending amount of the primary aluminum and an increase in a rate of closed loop recycling will lead to reduction of the $CO_2$ emissions in the production of the aluminum alloy sheet.
In general, it is said that the $CO_2$ emissions can be reduced to about one-thirtieth in a case where aluminum scraps are re-melted for casting compared with a case where the primary aluminum is produced. In particular, the amount of production of aluminum alloy sheets for beverage cans used worldwide is very large, and therefore further improvement in the rate of the closed loop recycling of the beverage cans is significantly meaningful in reduction of an environmental load.
In particular, tabs made predominantly of 5182 aluminum alloy (AA5182 alloy) have lower upper limits on compositional standards of Si, Fe, Cu, Mn, and the like, compared with can bodies made of 3104 aluminum alloy (AA3104 alloy). Thus, for the tabs, it is difficult to blend scraps derived from can stock containing 3104 aluminum alloy.
For example, if can scraps gathered in cities (UBC: Used Beverage Can) are blended as they are, the resultant contains relatively large amounts of components of the 3104 aluminum alloy due to a weight ratio between can bodies and can lids. Therefore, the compositional upper limits of the 5182 aluminum alloy can be easily exceeded. Therefore, there arises a need to dilute the components with a primary metal.
Thus, as compared with aluminum alloy sheets for can bodies, aluminum alloy sheets for tabs are prepared by using a large amount of the primary metal to adjust to the composition of the 5182 aluminum alloy, which lowers the recycling rate. Accordingly, a usage rate of the primary metal for tabs can be significantly reduced by changing an alloy for tabs to an alloy having a composition that facilitates blending of the 3104 aluminum alloy.
Patent Document 1 discloses an aluminum alloy sheet for a tab having a composition relatively approximated to the composition of the 3104 aluminum alloy with excellent recyclability.

**PRIOR** ART DOCUMENTS

PATENT DOCUMENTS

Patent Document 1: Japanese Unexamined Patent Application Publication No.H5-263175

SUMMARY OF THE INVENTION

PROBLEMS TO BE SOLVED BY THE INVENTION

Problems in the case where the alloy for tabs is made to include components approximated to those of the 3104 aluminum alloy include lowering of tab-bending strength and toughness of materials. For example, under a mechanism of pry opening a scored part by using the principle of lever as in a stay-on tab, there is a possibility of causing a can opening defect in which a tab is bent when opening the can.
The tab-bending strength is the maximum value of a load applied to a pull-up part when the can opening defect occurs and the tab is bent when opening the can. The tab-bending strength is a parameter to indicate a resistance to bending of the tab. Thus, high tab-bending strength is required in order to avoid an occurrence of the can opening defect.
In general, the tab-bending strength increases as one or both of a sheet thickness and strength of materials increase. Thus, a high strength 5182 aluminum alloy containing a large amount of Mg is used for tabs.
In contrast, if the conventional 3104 aluminum alloy is used for tabs, the tab-bending strength is largely reduced, which increases the possibility of causing the can opening defect. Also, if the sheet thickness is excessively increased to increase the tab-bending strength, the weight and the cost of the tab are increased.

Furthermore, the toughness of the materials affects formability of the tabs. If the toughness of the materials is low, cracks during forming may occur particularly in a part of the tab subjected to a bending process. However, the aluminum alloy sheet for tabs including the components relatively approximated to those of the conventional 3104 aluminum alloy does not solve either one or both of the aforementioned two problems, or in other words, does not satisfy either one or both of the tab-bending strength and the toughness (formability).

In one aspect of the present disclosure, it is desirable to provide an aluminum alloy sheet for tabs that can achieve both high tab-bending strength and high toughness while blended with scrap materials derived from can stock.

MEANS FOR SOLVING THE PROBLEMS

One aspect of the present disclosure provides an aluminum alloy sheet for a tab comprising a silicon (Si) content of 0.20 mass% or more and 0.60 mass% or less, an iron (Fe) content of 0.30 mass% or more and 0.70 mass% or less, a copper (Cu) content of 0.11 mass% or more and 0.40 mass% or less, a manganese (Mn) content of 0.7 mass% or more and 1.2 mass% or less, a magnesium (Mg) content of 1.1 mass% or more and 3.0 mass% or less, and a balance consisting of or including aluminum (Al) and inevitable impurities. A sheet thickness t (mm) and a tensile strength $\sigma_{B\_0°}$ (MPa) in a 0-degree direction with respect to a rolling direction satisfy the following formula (1). In an L-ST cross-section, a percentage of a total area of $Mg_2Si$ particles having an area of 0.3 $\mu m^2$ or more is 0.2% or less.

$$(2.7 \times t - 0.45) \times \sigma_{B\_0°} \geq 67 \quad \cdots \quad (1)$$

According to the above configuration, the aluminum alloy sheet can achieve both high tab-bending strength and high toughness while blended with scrap materials derived from can stock. That is, scraps of the 3104 aluminum alloy for can bodies can be blended at a certain amount, and the usage rate of the primary metal can be reduced to thereby reduce $CO_2$ emissions.

BRIEF DESCRIPTION OF THE DRAWINGS

FIG. 1 is a schematic view of a cyclic bending test.
FIG. 2 is an explanatory view of an L-ST cross-section.
FIG. 3 is a graph showing a relation between a value V and tab-bending strength in Examples.

MODE FOR CARRYING OUT THE INVENTION

Hereinafter, embodiments in which the present disclosure is implemented will be described with reference to the drawings.

[1. First Embodiment]

[1-1. Configuration]

<Composition>

An aluminum alloy sheet for a tab of the present disclosure (hereinafter, also simply referred to as "alloy sheet") includes aluminum (Al), silicon (Si), iron (Fe), copper (Cu), manganese (Mn), and magnesium (Mg).

The lower limit of the Si content is 0.20 mass%, and preferably 0.27 mass%. A Si content of less than 0.20 mass% may reduce an amount of Si precipitation due to processing heat in cold rolling, which is carried out after hot rolling and a solution heat treatment. As a result, the alloy sheet may have an insufficient tensile strength.

The average value of compositional standard of Si in 3104 aluminum alloy specified in JIS-H-4000:2014 is 0.30 mass%; and the average value of compositional standard of Si in 5182 aluminum alloy specified in JIS-H-4000:2014 is 0.10 mass%. Thus, by arranging the Si content to be 0.27 mass% or more, a large amount of scraps of the 3104 aluminum alloy can be blended.

The upper limit of the Si content is 0.60 mass%, and preferably 0.39 mass%. A Si content of more than 0.60 mass% reduces a difference between the solid solution temperature of $Mg_2Si$ and the solidus temperature of Al matrix, which makes it difficult to solid-solutionize as large an amount of Mg$_2$Si, which is present in an ingot, as possible in a homogenizing treatment process. Moreover, coarse Mg$_2$Si is newly precipitated in the hot rolling. As a result, the tensile strength and the toughness are decreased.

Furthermore, by arranging the Si content to be 0.39 mass% or less, Mg$_2$Si can be easily solid-solutionized in the homogenizing treatment process. Moreover, the precipitation of the coarse Mg$_2$Si in the hot rolling is inhibited, which makes it possible to obtain favorable tensile strength and toughness without performing a heat treatment process after the hot rolling.

The lower limit of the Fe content is 0.30 mass%, and preferably 0.35 mass%. The average value of compositional standard of Fe in the 3104 aluminum alloy is 0.40 mass%; and the average value of compositional standard of Fe in the 5182 aluminum alloy is 0.18 mass%. Thus, by arranging the Fe content to be 0.30 mass% or more, a large amount of scraps of the 3104 aluminum alloy can be blended.

The upper limit of the Fe content is 0.70 mass%, and preferably 0.55 mass%. A Fe content of more than 0.70 mass% increases Al-Fe-Mn-based or Al-Fe-Mn-Si-based intermetallic compounds that are abnormally coarse (that is, giant compounds). As a result, a crack propagation path is generated and the toughness of the alloy sheet is decreased.

Furthermore, by arranging the Fe content to be 0.55 mass% or less, the tensile strength and the toughness of the alloy sheet can be compensated while crystallization of the aforementioned coarse intermetallic compounds is inhibited in a case where a large amount of Mg is added.

The lower limit of the Cu content is 0.11 mass%, and preferably 0.17 mass%. A Cu content of less than 0.11 mass% leads to lack of Cu that increases the strength by forming a solid solution or precipitation. Consequently, the tensile strength of the alloy sheet is decreased. It should be noted that, by causing Cu to be precipitated during the cold rolling after the hot rolling and the solution heat treatment, the tensile strength of the alloy sheet is increased significantly.

Furthermore, the average value of compositional standard of Cu in the 3104 aluminum alloy is 0.15 mass%; and the average value of compositional standard of Cu in the 5182 aluminum alloy is 0.075 mass%. Thus, by arranging the Cu content to be 0.11 mass% or more, a large amount of scraps of the 3104 aluminum alloy can be blended.

The upper limit of the Cu content is 0.40 mass%, and preferably 0.25 mass%. A Cu content of more than 0.40 mass% increases coarse precipitates, which reduces the toughness of the alloy sheet. Moreover, by arranging the Cu content to be 0.25 mass% or less, the tensile strength can be increased without largely impairing the toughness of the alloy sheet.

The lower limit of the Mn content is 0.7 mass%, and preferably 0.75 mass%. A Mn content of less than 0.7 mass% leads to lack of Mn that increases the strength by forming a solid solution or precipitation. Consequently, the tensile strength of the alloy sheet is decreased.

Furthermore, the average value of compositional standard of Mn in the 3104 aluminum alloy is 1.1 mass%; and the average value of compositional standard of Mn in the 5182 aluminum alloy is 0.35 mass%. Thus, by arranging the Mn content to be 0.75 mass% or more, a large amount of scraps of the 3104 aluminum alloy can be blended, as compared to the conventional 5182 aluminum alloy.

The upper limit of the Mn content is 1.2 mass%, and preferably 0.95 mass%. A Mn content of more than 1.2 mass% increases Al-Fe-Mn-based or Al-Fe-Mn-Si-based intermetallic compounds that are abnormally coarse. As a result, a crack propagation path is generated and the toughness of the alloy sheet is decreased.

The lower limit of the Mg content is 1.1 mass%, and preferably 2.2 mass%. A Mg content of less than 1.1 mass% leads to lack of Mg that increases the strength by forming a solid solution. Consequently, the tensile strength of the alloy sheet is decreased. It should be noted that the tensile strength of the alloy sheet is increased significantly by causing Mg to be precipitated during the cold rolling after the hot rolling and the solution heat treatment.

The upper limit of the Mg content is 3.0 mass%, and preferably 2.8 mass%. The average value of compositional standard of Mg in the 3104 aluminum alloy is 1.05 mass%; and the average value of compositional standard of Mg in the 5182 aluminum alloy is 4.5 mass%. Thus, by arranging the Mg content to be 3.0 mass% or less, and preferably 2.8 mass% or less, it is possible to reduce an additional blending amount of materials containing Mg while blending a large amount of scraps of the 3104 aluminum alloy.

The alloy sheet may contain titanium (Ti). The upper limit of the Ti content is preferably 0.10 mass%. An ingot structure of the alloy sheet is micronized by containing Ti. Furthermore, the alloy sheet may contain zinc (Zn). The upper limit of the Zn content is preferably 0.25 mass%. Still further, the alloy sheet may contain chromium (Cr). The upper limit of the Cr content is preferably 0.10 mass%.

The alloy sheet may contain inevitable impurities to the extent that the performance of the alloy sheet is not significantly impaired. In other words, the alloy sheet contains Si, Fe, Cu, Mn, Mg, Ti, Zn, and Cr in the ranges described above, and a balance consists of or includes aluminum (Al) and the inevitable impurities. The upper limit of the total amount of the inevitable impurities is preferably 0.15 mass%. The balance may contain a substance other than aluminum and the inevitable impurities.

<Sheet Thickness, Material Strength, and Tab-bending Strength> As regards the alloy sheet of the present disclosure, a sheet thickness t (mm) and a tensile strength $\sigma_{B\_0°}$ (MPa) in a 0-degree direction with respect to a rolling direction satisfy the following formula (1).

$$V = (2.7 \times t - 0.45) \times \sigma_{B\_0°} \geq 67 \quad \cdots \quad (1)$$

The value of the tab-bending strength of the tab made of aluminum alloy empirically has a strong positive correlation with the value V (that is, the left side of the formula (1)) expressed by the material strength and the sheet thickness of the aluminum alloy sheet. Thus, a value V of 67 or more allows formation of a tab with sufficient tab-bending strength.

Furthermore, it is desirable that the tensile strength $\sigma_{B\_0°}$ is 330 MPa or more. This allows formation of a tab with a value of the sufficient tab-bending strength without significantly increasing the sheet thickness of the alloy sheet.

Mechanical significance with regard to the relation between the value V and the tab-bending strength can be explained as follows. Specifically, if the tab exhibits a low resistance to a load applied thereto when the tab is pulled up to open the can, the tab will undergo local material yielding and consequently begin to deform plastically before a scored part is properly opened. Tab-bending is a phenomenon in which the tab is bent due to progress of this plastic deformation.

Consideration is given to a cross-section of the tab parallel to a bending ridge line at a point where the tab-bending occurs. The resistance to a bending moment applied to the cross-section due to pulling up of the tab increases as a section modulus and a 0.2% proof stress $\sigma_{0.2}$ increase. The section modulus is a value intrinsic to a cross-sectional shape. The 0.2% proof stress $\sigma_{0.2}$ is yield strength of materials.

In the case of a tab with a fixed shape in the form of, for example, the stay-on tab of the standard DRT Holdings-type, the section modulus of the above-described cross-section increases as the sheet thickness increases. Thus, in the tab-bending, the sheet thickness and the 0.2% proof stress $\sigma_{0.2}$ of materials can account for how easily the bending begins due to the material yielding and the plastic deformation.

It should be noted that, since the tab-bending is a phenomenon that includes progress of the plastic deformation to the point where the tab is bent, there is a need to consider work hardening of materials during the plastic deformation. Even in a case where the 0.2% proof stress $\sigma_{0.2}$ is low and the plastic deformation begins early, the plastic deformation is inhibited from proceeding and the tab does not easily bend if a large amount of work hardening takes place during the plastic deformation.

Accordingly, the 0.2% proof stress $\sigma_{0.2}$ is replaced to introduce the tensile strength $\sigma_{B\_0°}$ as a parameter that indicates a material strength including the work hardening. By using the value V expressed by the sheet thickness t and the tensile strength $\sigma_{B\_0°}$, a tab-bending property of the aluminum alloy sheet can be evaluated.

The tensile strength $\sigma_{B\_0°}$ in the formula (1) is measured by a method specified in JIS-Z-2241:2011. The sheet thickness t is measured with, for example, a micro gauge.

The tab-bending strength of the aluminum alloy sheet can be measured according to the following procedures, for example. A shell formed of the aluminum alloy sheet is subjected to a forming with a conversion press, except for scoring, so that a can lid is formed as an end without a scored part. In addition, a tab formed of the aluminum alloy sheet is attached to the can lid. The can lid is fixed to a jig and the tab is pulled up. The value of the maximum load applied to the pull-up part at this time is regarded as the tab-bending strength.

Specifically, forming of the tab utilizes a die for a tab in the form of the stay-on tab of the standard DRT Holdings-type. Forming of the shell utilizes, for example, a die for a shell with the full-form (B64) profile of a diameter of φ204. Measurement of the tab-bending strength utilizes, for example, a pop and tear tester, which is an opening tester manufactured by LEAD Sokki Co., Ltd.

More specifically, a can lid, which is formed with a dedicated jig and which has a tab attached thereto but no scored part, is fixed to a jig. Subsequently, a jig for applying a load is attached to a pull-up part of the tab, and fixed such that a load is applied in a vertical direction with respect to a panel part of the lid with a magnitude that does not cause plastic deformation of the tab. In this state, the lid is rotated at a rotational speed of 30°/sec, whereby the tab is pulled up and bent. The maximum value of the load on the pull-up part of the tab is read within a range up to a 90-degree rotational angle.

<Toughness>

It is known that the formability of the tab is affected by the toughness of the aluminum alloy sheet.

(The Number of Times of Cyclic Bending)

There is a cyclic bending test as one of evaluation parameters for the toughness of the aluminum alloy sheet. Under the same sheet thickness, the aluminum alloy sheet is more excellent in toughness as the number of times of cyclic bending increases.

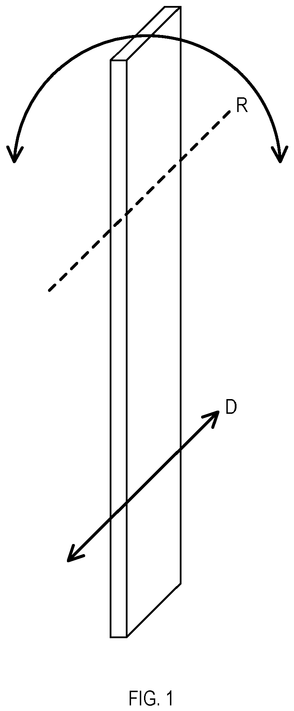

The cyclic bending test is carried out according to the following procedures. For example, as illustrated in FIG. 1, a test piece cut out into a strip shape of 12.5 mm in width and 200 mm in length is placed in such an orientation that the bending ridge line R is parallel to the rolling direction D of the alloy sheet. Both ends of the test piece are fixed with chucks, and a tensile force is applied at a load of 200N.

In this state, by using a jig, which is arranged at a position of 150 mm away in a longitudinal direction of the test piece from an end of the test piece fixed to the immovable chuck and which has a bending radius of 2.0 mm, as a fulcrum point, the other chuck is rotated rightwards and leftwards at 90 degrees respectively to perform the cyclic bending. Measurement is carried out on the number of times of bending until the test piece is broken.

The number of times of bending is counted such that a rightward or leftward bending operation at 90 degrees is counted as one time and a restoring operation to the original position is counted as one time. If the test piece is broken in the middle, an angle $\theta$ ($0°$ to $90°$) at the breakage is read and the number of times of cyclic bending N is calculated according to the following formula (2). In the formula (2), $N_0$ is the sum of the number of times the test piece is subjected to the rightward or leftward bending operation at 90 degrees and the restoring operation from a bent position at 90 degrees to the original position at 0 degree until the test piece is broken.

$$N = N_0 + \theta/90 \quad \cdots \quad (2)$$

Since evaluation of the cyclic bending is less favorable as the sheet thickness increases, there is a need to compensate for by using a reference sheet thickness and take it into account. To address this, a sheet thickness of 0.245 mm is used as the reference, and the standardized number of times of cyclic bending $N_s$ standardized by the following formula (3) is obtained. It should be noted that $t_t$ (mm) is a sheet thickness of the test piece.

$$N_s = N \times t_t / 0.245 \quad \cdots \quad (3)$$

In the present disclosure, the standardized number of times of cyclic bending $N_s$ is preferably 11.7 times or more, and more preferably 15.0 times or more.

(Second Phase Particles)

The toughness is affected by the strength and the distribution of second phase particles. That is, the greater the strength is and the higher the density of the second phase particles having large areas is, the lower the toughness is. In particular, as the Mg content and the Si content increase, $Mg_2Si$ particles are formed more easily. As a result, the $Mg_2Si$ particles become a source and a propagation path of a crack, which affects a decline in the toughness.

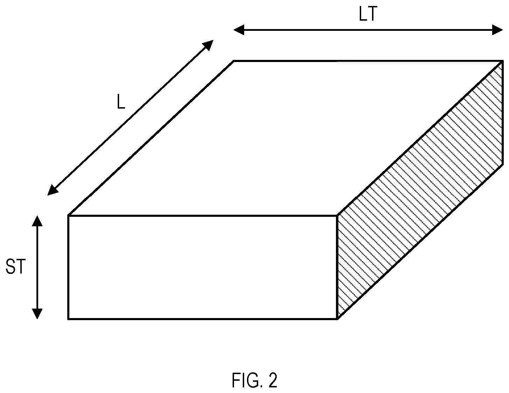

In the aluminum alloy sheet of the present disclosure, the percentage of the total area of the $Mg_2Si$ particles having an area of 0.3 $\mu m^2$ or more is preferably 0.2% or less in a center area in the sheet thickness of the L-ST cross-section illustrated in FIG.2 in oblique lines. It should be noted that, in FIG. 2, L indicates longitudinal directions, ST indicates sheet thickness directions, and LT indicates width directions.

The area ratio of the $Mg_2Si$ particles can be measured according to the following method, for example. Firstly, a measurement sample is cut out, and its surface subjected to the measurement (that is, the L-ST cross-section) is mechanically polished into a mirror surface. Subsequently, the polished surface (that is, the L-ST cross-section) is observed with a SEM (Scanning Electron Microscope), and ten fields of view are obtained in the center area in the sheet thickness. The SEM performs imaging at an accelerating voltage of 15 kV, with a magnification of 500 times, and in an area of 0.049 $mm^2$ for each field of view to obtain a compositional image (COMPO image), or a backscattered electron composition image.

The COMPO image photographed is subjected to analysis with "ImageJ", which is an image analysis software. Specifically, the brightness of the image expressed in 256 levels is adjusted such that its most frequent value is considered to be the background brightness, and particles with a brightness lower than a value obtained by subtracting 30 from the most frequent brightness value are determined to be the $Mg_2Si$ particles.

Among the $Mg_2Si$ particles determined, the total area of particles having an area of 0.3 $\mu m^2$ or more is calculated, and is divided by areas photographed for the 10 fields of view (that is, the total area photographed). In this way, the percentage of the total area of the $Mg_2Si$ particles having an area of 0.3 $\mu m^2$ or more in the L-ST cross-section is calculated.

<Anisotropy in Strength>

It is known that materials having a low ratio of cold rolling (hereinafter, abbreviated as "cold rolling ratio") have high toughness. The higher the cold rolling ratio is, the larger the 0.2% proof stress $\sigma_{0.2\_90°}$ in a 90-degree direction with respect to the rolling direction is, compared with the 0.2% proof stress $\sigma_{0.2\_0°}$ in the 0-degree direction with respect to the rolling direction. Thus, a difference between the 0.2% proof stress in the 0-degree direction and the 0.2% proof stress in the 90-degree direction with respect to the rolling direction, that is, anisotropy in strength, can be associated with the cold rolling ratio of the materials.

A value D of the alloy sheet of the present disclosure, obtained by the formula (4) by subtracting the 0.2% proof stress $\sigma_{0.2\_90°}$ in the 90-degree direction with respect to the rolling direction from the 0.2% proof stress $\sigma_{0.2\_0°}$ in the 0-degree direction with respect to the rolling direction, is preferably -4 MPa or more.

$$D = \sigma_{0.2\_0°} - \sigma_{0.2\_90°} \quad \cdots \quad (4)$$

The 0.2% proof stresses $\sigma_{0.2\_0°}$ and $\sigma_{0.2\_90°}$ in the formula (4) are measured in accordance with a method specified in JIS-Z-2241:2011.

The material structural significance of the anisotropy in strength, which is obtained by subtracting the 0.2% proof stress $\sigma_{0.2\_90°}$ in the 90-degree direction with respect to the rolling direction from the 0.2% proof stress $\sigma_{0.2\_0°}$ in the 0-degree direction with respect to the rolling direction, can be explained as follows.

Materials that have undergone hot rolling or annealing are in a recrystallized state, and have a high degree of integration of the isotropic cube orientation. Then, due to plastic deformation by cold rolling, cube orientation is deformed into a rolled texture having anisotropy in the rolling direction. Moreover, as the cold rolling ratio increases, the crystal grains are elongated to be slenderer in the rolling direction. Thus, the diameters of the crystal grains in the 0-degree direction with respect to the rolling direction increase, whereas there is less change in the diameters of the crystal grains in the 90-degree direction with respect to the rolling direction, as compared to the changes in the 0-degree direction.

The relation between these structural changes caused by the rolling and the 0.2% proof stress $\sigma_{0.2}$ is expressed in a relation in the formula (5) with reference to the Hall-Petch equation. In the formula (5), "x" is a resistance to grain boundary sliding, and "d" is a crystal grain size.

$$\sigma_{0.2} \propto \kappa \times d^{-1/2} \quad \cdots \quad (5)$$

The resistance $\kappa$ can be different values to the tensile stress in the 0-degree direction or the 90-degree direction with respect to the rolling direction. This is because, the degree of integration of the rolled texture having anisotropy in the rolling direction increases as the cold rolling ratio increases, and the resistance against sliding of the grain boundaries varies depending on the tensile direction.

Furthermore, the crystal grains are elongated to have larger diameters in the 0-degree direction with respect to the rolling direction as the cold rolling ratio increases, whereas the change in crystal grain size with respect to the cold rolling ratio is relatively small in the 90-degree direction with respect to the rolling direction. Integration of these influences results in an occurrence of the anisotropy in strength with respect to the increase in cold rolling ratio.

<Method of Producing Aluminum Alloy Sheet>

The aluminum alloy sheet of the present disclosure can be produced as follows, for example. Firstly, in accordance with a usual method, an ingot is produced by performing a semi-continuous casting method (that is, Direct Chill (DC) casting) on an aluminum alloy having the composition of the aluminum alloy sheet of the present disclosure.

Subsequently, four surfaces of the ingot, excluding a front end surface and a rear end surface, are ground. After the grinding, the ingot is placed in a soaking furnace and subjected to a homogenizing treatment. The temperature in the homogenizing treatment is preferably 530°C or higher and equal to or lower than the solidus temperature of the Al matrix.

If the temperature in the homogenizing treatment is 530°C or higher, the temperature in the homogenizing treatment is sufficiently higher than the solid solution temperature of the $Mg_2Si$. Thus, the amount of presence of $Mg_2Si$, which is the second phase particles crystallized or precipitated in the ingot, can be reduced. As a result, both the tensile strength and the toughness of the aluminum alloy sheet are improved. Moreover, by setting the temperature in the homogenizing treatment at 550°C or higher, the amount of presence of $Mg_2Si$ can be extremely reduced.

On the other hand, if the temperature in the homogenizing treatment is equal to or lower than the solidus temperature of the Al matrix, the aluminum alloy sheet can be produced without an occurrence of local fusion. The temperature in the homogenizing treatment is preferably lower than the solidus temperature of the Al matrix by 10°C or more. Thus, the aluminum alloy sheet can be stably produced without an occurrence of local fusion.

The solid solution temperature of $Mg_2Si$ and the solidus temperature of the Al matrix are uniquely determined depending on the composition of the aluminum alloy. For example, these temperatures can be obtained by inputting the composition of the aluminum alloy into "JMatPro", a thermodynamic calculation software developed by Sente Software, to calculate an equilibrium diagram. CALPHAD method is used for calculating a thermodynamic model.

The duration of time for the homogenizing treatment is preferably, for example, one hour or longer and 20 hours or shorter. When the duration of time for the homogenizing treatment is one hour or longer, the temperature of the entire slab becomes uniform, which easily eliminates segregation of the ingot structure and easily solid-solutionizes the $Mg_2Si$ particles again. The longer the duration of time for the homogenizing treatment is, the more solid-solutionizing of the $Mg_2Si$ particles can be facilitated. However, if the duration of time for the homogenizing treatment exceeds 20 hours, the effect of the homogenizing treatment is saturated.

After the homogenizing treatment, the ingot is subjected to the hot rolling. The hot rolling process includes a rough rolling process and a finish rolling process. In the rough rolling process, the ingot is processed into a plate material having a thickness of about tens of millimeters by reverse rolling. In the finish rolling process, the thickness of the plate material is reduced to about a few millimeters by, for example, tandem rolling, and a hot-rolled coil is formed by winding the plate material in the form of a coil.

If the total reduction rate in the finish rolling is high, recrystallized structures are formed after winding, which can increase the degree of integration of the isotropic cube orientation. If the temperature is high during the winding in the finish rolling, the recrystallized structures are formed after the winding, which can increase the degree of integration of the cube orientation.

Furthermore, by subjecting the hot-rolled coil to intermediate annealing (that is, a solution heat treatment) so as to solid-solutionize Mg and the like again, the alloy sheet with high tensile strength can be obtained. For example, a heat treatment (that is, annealing) is performed by utilizing a continuous annealing line (CAL) at a target actual temperature of 440°C or higher for 30 seconds or longer, and thereafter the hot rolled coil is subjected to forced cooling by air cooling, for example. Consequently, the tensile strength of the alloy sheet can be effectively increased.

Subsequent to the hot rolling, the plate material is subjected to the cold rolling. In the cold rolling, the hot-rolled coil is rolled until a product sheet thickness is achieved. The cold rolling may be either single rolling or tandem rolling. In the cold rolling where the single rolling is employed, the rolling is preferably carried out in two or more divided passes.

Furthermore, by subjecting the coil in the midst of the cold rolling to the intermediate annealing so as to solid-solutionize Mg and the like again, it is possible to obtain an alloy sheet whose final cold rolling ratio is lowered and whose material anisotropy is suppressed, while increasing the tensile strength of the materials. For example, the tensile strength of the alloy sheet can be effectively increased by utilizing the continuous annealing line to perform the heat treatment (that is, annealing) at a target actual temperature of 440°C or higher, and thereafter performing the forced cooling by the air cooling, for example. It should be noted that the intermediate annealing performed on the hot rolled coil and the coil in the midst of the cold rolling is optional.

Still further, by setting the finish temperature in an intermediate pass, excluding the final pass, at 120°C or higher in the cold rolling, Si, Cu, and Mg are finely precipitated and undergo age hardening. Consequently, the tensile strength of the alloy sheet can be increased. Moreover, by setting the finish temperature at 130°C or higher, the tensile strength of the alloy sheet can be further increased.

If the solution heat treatment is not performed in the midst of the cold rolling, the cold rolling ratio (that is, a target total reduction rate) is preferably 75% or more. If the cold rolling ratio is 75% or more, the tensile strength of the alloy sheet can be increased. Furthermore, the lower the cold rolling ratio is, the more the cube orientation remains. Therefore, the cold rolling ratio is preferably 92% or less.

If the solution heat treatment is performed in the midst of the cold rolling, the cold rolling ratio (that is, a target total reduction rate after the solution heat treatment) is preferably 45% or more. If the cold rolling ratio is 45% or more, the tensile strength of the alloy sheet can be increased by performing the solution heat treatment to solid-solutionize Mg and the like again, to thereby decrease the cold rolling ratio. Furthermore, the lower the cold rolling ratio is, the more the cube orientation remains. Therefore, the cold rolling ratio is preferably 80% or less.

The cold rolling ratio R (%) can be obtained by the following formula (6) by using a sheet thickness $t_0$ (mm) after the hot rolling or the solution heat treatment and a product sheet thickness $t_1$ (mm) after the cold rolling.

$$R=(t_0-t_1)/t_0\times 100 \cdots (6)$$

The product sheet thickness can be appropriately selected so that a desired tab-bending strength can be obtained. The product sheet thickness is selected so that the formula (1) is satisfied. As described above, the aluminum alloy sheet of the present disclosure can inhibit an increase in sheet thickness required for keeping the tab-bending strength high.

Pre-coating may be or may not be performed in a coating line or the like on the coil that has undergone the cold rolling until the product sheet thickness is achieved. In the case of performing the pre-coating, the coil that has undergone the cold rolling is subjected to degreasing, cleaning, and a chemical treatment on a surface, and a coating baking treatment after being coated with a coating material.

In the chemical treatment, chemicals such as a chromate-based chemical and a zirconium-based chemical are used. As the coating material, materials such as an epoxy-based material and a polyester-based material are used. These can be selected in accordance with applications. In the coating baking treatment, the coil is heated within about 30 seconds at 220°C or higher and 270°C or lower in the actual temperature of the coil (PMT: Peak Metal Temperature). At this time, the lower the PMT is, the more the recovery of the materials is inhibited, which makes it possible to keep the tensile strength of the alloy sheet high.

[1-2. Effects]

The embodiment detailed above can bring effects described below.

(1a) The aluminum alloy sheet can achieve both high tab-bending strength and high toughness while blended with scrap materials derived from can stock. That is, it is possible to blend scraps of the 3104 aluminum alloy for a can body at a certain amount, and to reduce a usage rate of the primary metal, whereby the $CO_2$ emissions can be reduced.

[2. Other Embodiments]

Although the embodiment of the present disclosure has been described hereinabove, the present disclosure is not limited to the above-described embodiment and may take various forms.

(2a) **In** addition to the aluminum alloy sheet of the above-described embodiment, the present disclosure includes various forms, such as a member including this aluminum alloy sheet and a method of producing this aluminum alloy sheet.

(2b) Functions of one element in the aforementioned embodiments may be distributed to two or more elements, and functions of two or more elements may be integrated into one element. A part of the configuration of the aforementioned embodiments may be omitted. In addition, at least a part of the configuration of the aforementioned embodiments may be added to or replaced with another configuration of the aforementioned embodiments. Any and all modes included in the technical idea specified by the languages used in the claims are embodiments of the present disclosure.

[3. Examples]

Hereinafter, details of tests conducted to confirm the effects of the present disclosure and evaluation results of the tests will be explained.

<Production of Aluminum Alloy Sheet>

As examples and comparative examples, aluminum alloy sheets S1 to S17 shown in Tables 1 and 2 were produced. Hereinafter, specific production procedures will be explained.

Firstly, by performing a semi-continuous casting method, an ingot was produced so as to include 0.32 mass% of Si, 0.43 mass% of Fe, 0.22 mass% of Cu, 0.80 mass% of Mn, 2.6 mass% of Mg, and a balance consisting of aluminum and inevitable impurities. The ingot includes 0.10 mass% or less of Ti, 0.25 mass% or less of Zn, 0.10 mass% or less of Cr, and 0.15 mass% or less of the inevitable impurities.

Subsequently, four surfaces of the ingot, excluding a front end surface and a rear end surface, were ground. After the grinding, the ingot was placed in a furnace to be subjected to the homogenizing treatment. The temperature in the homogenizing treatment is as shown in Table 1. After the homogenizing treatment, the ingot was taken out of the furnace, and the hot rolling was immediately started to thereby obtain a rolled sheet.

As regards S1 to S8, the rolled sheet that had undergone the hot rolling was subjected to the cold rolling until the sheet thickness shown in Table 1 was achieved. After the cold rolling, the rolled sheet was subjected to the intermediate annealing. The temperature during the intermediate annealing is as shown in Table 1. The duration of time was 30 seconds. After the intermediate annealing, the rolled sheet was cooled to the room temperature by air cooling. After the cooling, the rolled sheet was subjected again to the cold rolling. The target cold rolling ratio in the cold rolling after the intermediate annealing is as shown in Table 1.

As regards S9 to S14, the rolled sheet that had undergone the hot rolling was subjected to the intermediate annealing. The sheet thickness and the temperature during the intermediate annealing were as shown in Table 1. The duration of time was 30 seconds. After the intermediate annealing, the rolled sheet was cooled to the room temperature by air cooling. After the cooling, the rolled sheet was subjected to the cold rolling. The target cold rolling ratio in the cold rolling is as shown in Table 1.

As regards S15 to S17, the rolled sheet that had undergone the hot rolling was subjected to the cold rolling without performing annealing. The target cold rolling ratio in the cold rolling is as shown in Table 1.

The product sheet thickness (that is, $t_1$ in the formula (6)) after the cold rolling in S1 to S17 was set within a range of $0.330 \pm 0.05$ mm.

In S1 to S14, S16 and S17, after the cold rolling, the sheet surface was coated with a coating material, and the coating baking treatment was performed for about 30 seconds. The actual temperature (PMT) during the baking of the coating is as shown in Table 1. In S15, coating and baking were not performed. Thus, the aluminum alloy sheets S1 to S17 were obtained. Furthermore, Table 1 shows the sheet thicknesses (that is, product sheet thicknesses) of the aluminum alloy sheets S1 to S17 measured with a micro gauge.

[Table 1]

| Examples | Sheet Thickness t | Homogenizing Treatment | Intermediate Annealing Sheet Thickness | Intermediate Annealing Temperature | Cold Rolling Ratio | Coating PMT |
|---|---|---|---|---|---|---|
| | mm | °C | mm | °C | % | °C |
| S1 | 0.332 | 580 | 1.10 | 550 | 70.0 | 230 |
| S2 | 0.333 | 580 | 1.10 | 550 | 70.0 | 270 |
| S3 | 0.331 | 580 | 0.66 | 550 | 50.0 | 230 |
| S4 | 0.331 | 580 | 0.66 | 550 | 50.0 | 270 |
| S5 | 0.335 | 580 | 1.10 | 520 | 70.0 | 230 |
| S6 | 0.331 | 580 | 1.10 | 520 | 70.0 | 270 |
| S7 | 0.329 | 580 | 0.66 | 520 | 50.0 | 230 |
| S8 | 0.329 | 580 | 0.66 | 520 | 50.0 | 270 |
| S9 | 0.331 | 550 | 2.00 | 520 | 83.5 | 230 |
| S10 | 0.335 | 550 | 2.00 | 520 | 83.5 | 250 |
| S11 | 0.336 | 550 | 2.00 | 520 | 83.5 | 270 |
| S12 | 0.333 | 520 | 2.00 | 520 | 83.5 | 230 |
| S13 | 0.335 | 520 | 2.00 | 520 | 83.5 | 250 |
| S14 | 0.334 | 520 | 2.00 | 520 | 83.5 | 270 |
| S15 | 0.328 | 580 | - | - | 83.5 | - |
| S16 | 0.326 | 580 | - | - | 83.5 | 220 |
| S17 | 0.327 | 580 | - | - | 83.5 | 230 |

[Table 2]

| Examples | Tensile Property 0-degree Direction to Rolling $\sigma_{B\_0°}$ | Tensile Property 0-degree Direction to Rolling $\sigma_{0.2\_0°}$ | Tensile Property 90-degree Direction to Rolling $\sigma_{0.2\_90°}$ | $(2.7 \times t - 0.45) \times \sigma_{B\_0°}$ | Area Ratio of $Mg_2Si$ | Standardized Number of Times of Cyclic Bending | Anisotropy in Strength $\dfrac{\sigma_{0.2\_0°}}{\sigma_{0.2\_90°}}$ | Possible Blending Ratio of 3104 |
|---|---|---|---|---|---|---|---|---|
| | Mpa | Mpa | Mpa | - | % | Number of Times | Mpa | wt% |
| S1 | 376 | 338 | 331 | 168 | 0.1 | 16.4 | 7 | ≥50 |
| S2 | 368 | 328 | 323 | 165 | 0.1 | 16.8 | 5 | ≥50 |
| S3 | 353 | 310 | 298 | 156 | 0.0 | 19.5 | 12 | ≥50 |
| S4 | 354 | 307 | 301 | 157 | 0.0 | 20.4 | 6 | ≥50 |
| S5 | 367 | 330 | 328 | 167 | 0.1 | 16.7 | 2 | ≥50 |
| S6 | 354 | 315 | 316 | 157 | 0.1 | 16.8 | -1 | ≥50 |
| S7 | 347 | 303 | 293 | 152 | 0.1 | 19.3 | 11 | ≥50 |

(continued)

| Exam-ples | Tensile Property | | | $(2.7{\times}t\text{-}0.45){\times}\sigma_{B\_0°}$ | Area Ratio of $Mg_2Si$ | Standar-dized Number of Times of Cyclic Bending | Anisotro-py in Strength | Possi-ble Blend-ing Ratio of 3104 |
|---|---|---|---|---|---|---|---|---|
| | 0-degree Direction to Rolling | | 90-degree Direction to Rolling | | | | $\sigma_{0.2\_0°}\text{-}$ | |
| | $\sigma_{B\_0°}$ | $\sigma_{0.2\_0°}$ | $\sigma_{0.2\_90°}$ | | | | $\sigma_{0.2\_90°}$ | |
| | Mpa | Mpa | Mpa | - | % | Number of Times | Mpa | wt% |
| S8 | 334 | 289 | 285 | 146 | 0.1 | 19.8 | 4 | ≥50 |
| S9 | 373 | 341 | 351 | 165 | 0.0 | 12.6 | -10 | ≥50 |
| S10 | 368 | 332 | 337 | 167 | 0.0 | 14.0 | -5 | ≥50 |
| S11 | 360 | 321 | 326 | 165 | 0.0 | 14.3 | -5 | ≥50 |
| S12 | 356 | 325 | 336 | 160 | 0.8 | 11.1 | -11 | ≥50 |
| S13 | 348 | 314 | 327 | 158 | 0.8 | 11.4 | -13 | ≥50 |
| S14 | 346 | 310 | 320 | 156 | 0.8 | 11.5 | -10 | ≥50 |
| S15 | 353 | 323 | 330 | 154 | 0.0 | 14.1 | -7 | ≥50 |
| S16 | 341 | 311 | 323 | 147 | 0.0 | 14.8 | -12 | ≥50 |
| S17 | 341 | 310 | 317 | 147 | 0.0 | 14.7 | -7 | ≥50 |

<Evaluation of Aluminum Alloy Sheets>

(Tensile Property)

Milling was employed to prepare two of No. 5 test pieces, specified in JIS-Z-2241:2011, from each of the aluminum alloy sheets S1 to S17. Longitudinal axes of the two test pieces extend in the 0-degree direction and the 90-degree direction with respect to the rolling direction, respectively.

Those test pieces were subjected to a tensile test in accordance with JIS-Z-2241:2011, and the 0.2% proof stress and the tensile strength were measured. Table 2 shows measurement results of the tensile strength $\sigma_{B\_0°}$ in the 0-degree direction with respect to the rolling direction, measurement results of the 0.2% proof stress $\sigma_{0.2\_0°}$ in the 0-degree direction with respect to the rolling direction, and measurement results of the 0.2% proof stress $\sigma_{0.2\_90°}$ in the 90-degree direction with respect to the rolling direction.

Furthermore, the value V ($=(2.7{\times}t\text{-}0.45){\times}\sigma_{B\_0°}$) of the formula (1) was calculated based on the measurement results of the sheet thickness and the tensile strength. Calculation results are shown in Table 2.

(Toughness)

In each of the aluminum alloy sheets S1 to S17, in accordance with the measurement method described in the embodiments, the percentage (area ratio) of the total area of the $Mg_2Si$ particles having an area of 0.3 $\mu m^2$ or more in the L-ST cross-section was calculated. The measurement results are shown in Table 2.

The standardized number of times of cyclic bending of each of the aluminum alloy sheets S1 to S 17 was calculated in accordance with the measurement method and the formulas (2) and (3) described in the embodiments. The results are shown in Table 2.

(Anisotropy in Strength)

The anisotropy in strength (that is, the value D) of each of the aluminum alloy sheets of S1 to S17 was calculated based on the formula (4) described in the embodiments. The results are shown in Table 2.

(Scrap Blending Ratio)

With respect to the compositions of the aluminum alloy sheets S1 to S17, it was determined whether the possible blending ratio of the scraps of the 3104 aluminum alloy is 50 mass% or more. The results are shown in Table 2.

In Table 2, the aluminum alloy sheets given with "≧50" mean that 50 mass% or more of the 3104 aluminum alloy can be blended. It should be noted that the possible blending ratio of the scraps of the 3104 aluminum alloy is determined based on Table 3.

Table 3 shows a correspondence between the blending ratio of the 3104 aluminum alloy and the 5182 aluminum alloy, and the average values of the compositional standards. The first line of Table 3 shows the average values of the compositional standard of the 3104 aluminum alloy, and the second line of Table 3 shows the average values of the compositional standard of the 5182 aluminum alloy.

For example, when the blending ratio of the 3104 aluminum alloy is 50 mass%, the average value of Si is 0.20 mass%, the average value of Fe is 0.29 mass%, the average value of Cu is 0.11 mass%, the average value of Mn is 0.7 mass%, and the average value of Mg is 2.8 mass%.

Accordingly, when the ratios of the respective components Si, Fe, Cu, Mn, and Mg of the aluminum alloy sheet are equal to or more than the aforementioned values respectively, the possible blending ratio of the 3104 aluminum alloy sheet is 50 mass% or more. As the blending ratio of the 3104 aluminum alloy increases, the contents of Si, Fe, Cu, and Mn increase, but the content of Mg decreases. The aluminum alloy sheets S1 to S17 can be blended with 50 mass% or more of the scraps of the 3104 aluminum alloy.

[Table 3]

| Alloy | Si | Fe | Cu | Mn | Mg |
|---|---|---|---|---|---|
| 3104 | 0.30 | 0.40 | 0.15 | 1.10 | 1.05 |
| 5182 | 0.10 | 0.18 | 0.08 | 0.35 | 4.50 |
| Blending Ratio of 3104 | Si | Fe | Cu | Mn | Mg |
| 5% | 0.11 | 0.19 | 0.08 | 0.4 | 4.3 |
| 10% | 0.12 | 0.20 | 0.08 | 0.4 | 4.2 |
| 15% | 0.13 | 0.21 | 0.09 | 0.5 | 4.0 |
| 20% | 0.14 | 0.22 | 0.09 | 0.5 | 3.8 |
| 25% | 0.15 | 0.23 | 0.09 | 0.5 | 3.6 |
| 30% | 0.16 | 0.24 | 0.10 | 0.6 | 3.5 |
| 35% | 0.17 | 0.25 | 0.10 | 0.6 | 3.3 |
| 40% | 0.18 | 0.27 | 0.11 | 0.7 | 3.1 |
| 45% | 0.19 | 0.28 | 0.11 | 0.7 | 2.9 |
| 50% | 0.20 | 0.29 | 0.11 | 0.7 | 2.8 |
| 55% | 0.21 | 0.30 | 0.12 | 0.8 | 2.6 |
| 60% | 0.22 | 0.31 | 0.12 | 0.8 | 2.4 |
| 65% | 0.23 | 0.32 | 0.12 | 0.8 | 2.3 |
| 70% | 0.24 | 0.33 | 0.13 | 0.9 | 2.1 |
| 75% | 0.25 | 0.34 | 0.13 | 0.9 | 1.9 |
| 80% | 0.26 | 0.36 | 0.14 | 1.0 | 1.7 |
| 85% | 0.27 | 0.37 | 0.14 | 1.0 | 1.6 |
| 90% | 0.28 | 0.38 | 0.14 | 1.0 | 1.4 |
| 95% | 0.29 | 0.39 | 0.15 | 1.1 | 1.2 |
| 100% | 0.30 | 0.40 | 0.15 | 1.1 | 1.1 |

(Tab-bending Strength)

Aside from the aluminum alloy sheets S1 to S17, two or more aluminum alloy sheets with different sheet thicknesses and tensile strengths were prepared, and their tab-bending strengths were measured in accordance with the measurement method described in the embodiments.

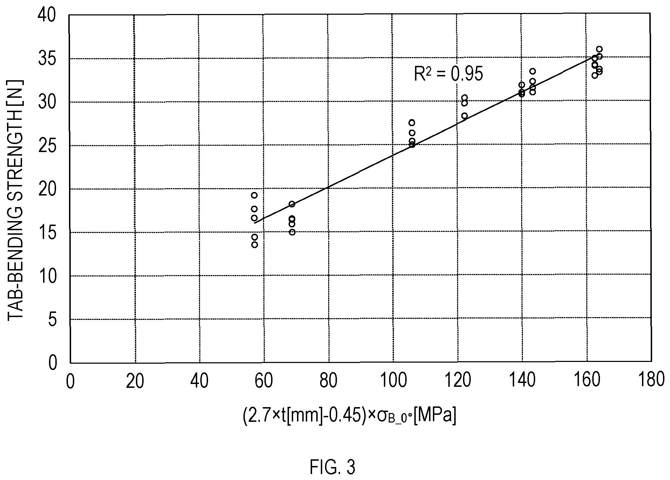

Table 4 and FIG. 3 show the results of the measurement in relation to the sheet thickness t of the aluminum alloy sheet, the tensile strength $\sigma_{B\_0°}$ in the 0-degree direction with respect to the rolling direction, and the value V (= $(2.7\times t-0.45)\times\sigma_{B\_0°}$) of the formula (1). Additionally, Table 5 shows components of the aluminum alloy sheets that have undergone measurement of the tab-bending strength.

It was found out from FIG. 3 that the value V and the tab-bending strength have a high correlation. It should be noted that FIG. 3 shows results of utilizing the tab in the form of the stay-on tab of the standard DRT Holdings-type; however, a tab in the different form shows a similar tendency.

[Table 4]

| Level | Alloy No. | Sheet Thickness | Tensile Property 0-degree to Rolling | $(2.7\times t-0.45)\times\sigma_{B\_0°}$ | Tab Property |
|---|---|---|---|---|---|
| | | t | $\sigma_{B\_0°}$ | | Tab-bending Strength |
| | | mm | MPa | - | N |
| 1 | 1 | 0.370 | 299 | 164 | 35.9 |
| 2 | 1 | 0.370 | 299 | 164 | 33.2 |
| 3 | 1 | 0.370 | 299 | 164 | 33.6 |
| 4 | 1 | 0.370 | 299 | 164 | 35.1 |
| 5 | 2 | 0.345 | 298 | 143 | 31.5 |
| 6 | 2 | 0.345 | 298 | 143 | 33.3 |
| 7 | 2 | 0.345 | 298 | 143 | 31.0 |
| 8 | 2 | 0.345 | 298 | 143 | 32.2 |
| 9 | 2 | 0.345 | 298 | 143 | 31.0 |
| 10 | 3 | 0.320 | 393 | 163 | 34.1 |
| 11 | 3 | 0.320 | 393 | 163 | 34.0 |
| 12 | 3 | 0.320 | 393 | 163 | 34.9 |
| 13 | 3 | 0.320 | 393 | 163 | 32.8 |
| 14 | 4 | 0.300 | 389 | 140 | 31.8 |
| 15 | 4 | 0.300 | 389 | 140 | 30.8 |
| 16 | 4 | 0.300 | 389 | 140 | 30.8 |
| 17 | 4 | 0.300 | 389 | 140 | 30.8 |
| 18 | 4 | 0.300 | 389 | 140 | 31.0 |
| 19 | 5 | 0.285 | 383 | 122 | 29.7 |
| 20 | 5 | 0.285 | 383 | 122 | 29.7 |
| 21 | 5 | 0.285 | 383 | 122 | 30.3 |
| 22 | 5 | 0.285 | 383 | 122 | 28.2 |
| 23 | 6 | 0.267 | 391 | 106 | 26.4 |
| 24 | 6 | 0.267 | 391 | 106 | 27.5 |
| 25 | 6 | 0.267 | 391 | 106 | 25.4 |
| 26 | 6 | 0.267 | 391 | 106 | 25.0 |
| 27 | 7 | 0.235 | 373 | 69 | 18.1 |

(continued)

| Level | Alloy No. | Sheet Thickness | Tensile Property | $(2.7 \times t - 0.45) \times \sigma_{B\_0°}$ | Tab Property |
| | | | 0-degree to Rolling | | Tab-bending Strength |
| | | t | $\sigma_{B\_0°}$ | | |
| | | mm | MPa | - | N |
|---|---|---|---|---|---|
| 28 | 7 | 0.235 | 373 | 69 | 16.4 |
| 29 | 7 | 0.235 | 373 | 69 | 14.9 |
| 30 | 7 | 0.235 | 373 | 69 | 15.9 |
| 31 | 7 | 0.235 | 373 | 69 | 16.5 |
| 32 | 8 | 0.220 | 398 | 57 | 14.4 |
| 33 | 8 | 0.220 | 398 | 57 | 19.2 |
| 34 | 8 | 0.220 | 398 | 57 | 17.6 |
| 35 | 8 | 0.220 | 398 | 57 | 16.6 |
| 36 | 8 | 0.220 | 398 | 57 | 13.5 |

[Table 5]

| Alloy No. | Si | Fe | Cu | Mn | Mg |
| | mass% | | | | |
|---|---|---|---|---|---|
| 1 | 0.33 | 0.43 | 0.21 | 1.0 | 1.3 |
| 2 | 0.30 | 0.43 | 0.21 | 1.0 | 1.2 |
| 3 | 0.10 | 0.19 | 0.05 | 0.3 | 4.6 |
| 4 | 0.11 | 0.29 | 0.13 | 0.4 | 4.6 |
| 5 | 0.10 | 0.29 | 0.12 | 0.5 | 4.5 |
| 6 | 0.11 | 0.22 | 0.14 | 0.4 | 4.8 |
| 7 | 0.10 | 0.23 | 0.09 | 0.3 | 4.5 |
| 8 | 0.12 | 0.28 | 0.13 | 0.5 | 4.6 |

As shown in Table 2, in all of the aluminum alloy sheets S1 to S17, the value V having a high correlation with the tab-bending strength is 67 or higher. It was confirmed that the aluminum alloy sheet having a value of 67 or higher has the sheet thickness and the tensile strength that lead to obtainment of high tab-bending strength.

Furthermore, all of the aluminum alloy sheets S1 to S17 have a tensile strength $\sigma_{B\_0°}$ of 330 MPa or more in the 0-degree direction with respect to the rolling direction, and can ensure high tab-bending strength while inhibiting an excessive increase in the sheet thickness.

The aluminum alloy sheets S1 to S11 and S15 to S17 whose temperature in the homogenizing treatment had been set high exhibited the high tensile strength and the high standardized number of times of cyclic bending. For example, the temperature in the homogenizing treatment is higher in the case of the aluminum alloy sheets S9 to S11 than in the case of the aluminum alloy sheets S12 to S14. Thus, under the same processes and the same coating baking temperature, the aluminum alloy sheets S9 to S11 exhibit higher tensile strength and the higher number of times of cyclic bending.

Furthermore, the lower the coating baking temperature (PMT) was, the higher the tensile strength of the alloy sheet was. For example, comparisons between/among: S1 and S2, S5 and S6, S7 and S8, S9 to S11, S12 to S14, and S16 and S17 showed that an example set with lower coating baking temperature exhibited higher values of the 0.2% proof stress $\sigma_{0.2\_0°}$ in the 0-degree direction with respect to the rolling direction, the 0.2% proof stress $\sigma_{0.2\_90°}$ in the 90-degree direction with respect to the rolling direction, and the tensile strength $\sigma_{B\_90°}$ in the 0-degree direction with respect to the rolling direction.

In the aluminum alloy sheets S1 to S11 and S15 to S17 set with temperatures in the homogenizing treatment at 550°C or higher, the area ratios of the $Mg_2Si$ particles were smaller than in other examples, and were 0.2% or less. A comparison between the aluminum alloy sheets S9 to S11 and the aluminum alloy sheets S12 to S14 showed that the standardized numbers of times of cyclic bending of the aluminum alloy sheets S9 to S11 were greater than those of the aluminum alloy sheets S12 to S14 although the tensile strengths of the aluminum alloy sheets S9 to S11 in the 0-degree direction with respect to the rolling direction were higher than those of the aluminum alloy sheets S12 to S14.

The number of times of cyclic bending varies also depending on the tensile strength. A comparison between the aluminum alloy sheets S9 and S11 having relatively small area ratios of the $Mg_2Si$ particles and the same cold rolling ratio shows that the aluminum alloy sheet S11 having a relatively smaller tensile strength has the standardized number of times of cyclic bending greater than that of the aluminum alloy sheet S9.

The standardized number of times of cyclic bending varies also depending on the anisotropy in the material structure. For example, a comparison between the aluminum alloy sheets S1, S2, and S5 whose anisotropy in strength is -4 MPa or more and the aluminum alloy sheets S9 to S11 whose anisotropy in strength is less than -4 MPa shows that the numbers of times of cyclic bending in S1, S2, and S5 are higher than those in S9 to S11 although their tensile strengths are relatively close to each other.

Furthermore, a comparison between the aluminum alloy sheets S3, S4, and S6 to S8 whose anisotropy in strength is -4MPa or more and the aluminum alloy sheets S15 to S17 whose anisotropy in strength is less than -4 MPa shows that the numbers of times of cyclic bending in S3, S4, and S6 to S8 are considerably higher than those in S15 to S17 although their tensile strengths are relatively close to each other.

**Claims**

1. An aluminum alloy sheet for a tab, the aluminum alloy sheet comprising:

   a silicon (Si) content of 0.20 mass% or more and 0.60 mass% or less;
   an iron (Fe) content of 0.30 mass% or more and 0.70 mass% or less;
   a copper (Cu) content of 0.11 mass% or more and 0.40 mass% or less;
   a manganese (Mn) content of 0.7 mass% or more and 1.2 mass% or less;
   a magnesium (Mg) content of 1.1 mass% or more and 3.0 mass% or less; and
   a balance consisting of or including aluminum (Al) and inevitable impurities,
   wherein a sheet thickness t (mm) and a tensile strength $\sigma_{B\_0°}$ (MPa) in a 0-degree direction with respect to a rolling direction satisfy the following formula (1):

   $$(2.7 \times t - 0.45) \times \sigma_{B\_0°} \geq 67 \quad \cdots \quad (1),$$

   and
   wherein, in an L-ST cross section, a percentage of a total area of $Mg_2Si$ particles having an area of $0.3 \mu m^2$ or more is 0.2% or less.

2. The aluminum alloy sheet for a tab according to claim 1,

   wherein, when a bending operation including bending at 90 degrees and restoring to a position of 0 degree is repeated for a test piece, which is cut out into a strip shape of 12.5 mm in width and 200 mm or longer and 300 mm or shorter in length, in such an orientation that a bending ridge line is parallel to the rolling direction, a standardized number of times of cyclic bending $N_s$ is 11.7 or more,
   wherein the standardized number of times of cyclic bending $N_s$ is obtained by standardizing the number of times of cyclic bending N, which is the number of times of the bending operation until the test piece is broken, in accordance with a sheet thickness tt (mm) of the test piece and the following formula (2):

   $$N_s = N \times t_t / 0.245 \quad \cdots \quad (2),$$

   and
   wherein the tensile strength $\sigma_{B\_0°}$ is 330 MPa or more.

3. The aluminum alloy sheet for a tab according to claim 2,
   wherein the standardized number of times of cyclic bending $N_s$ is 15.0 or more.

4. The aluminum alloy sheet for a tab according to any one of claims 1 to 3,
   wherein a value obtained by subtracting a 0.2% proof stress $\sigma_{0.2\_90°}$ in a 90-degree direction with respect to the rolling direction from a 0.2% proof stress $\sigma_{0.2\_0°}$ in the 0-degree direction with respect to the rolling direction is - 4 MPa or more.

5. The aluminum alloy sheet for a tab according to any one of claims 1 to 3,
   wherein the aluminum alloy sheet comprises:

   the silicon (Si) content of 0.27 mass% or more and 0.39 mass% or less;
   the iron (Fe) content of 0.35 mass% or more and 0.55 mass% or less;
   the copper (Cu) content of 0.17 mass% or more and 0.25 mass% or less;
   the manganese (Mn) content of 0.75 mass% or more and 0.95 mass% or less; and
   the magnesium (Mg) content of 2.2 mass% or more and 2.8 mass% or less.

6. The aluminum alloy sheet for a tab according to claim 4,
   wherein the aluminum alloy sheet comprises:

   the silicon (Si) content of 0.27 mass% or more and 0.39 mass% or less;
   the iron (Fe) content of 0.35 mass% or more and 0.55 mass% or less;
   the copper (Cu) content of 0.17 mass% or more and 0.25 mass% or less;
   the manganese (Mn) content of 0.75 mass% or more and 0.95 mass% or less; and
   the magnesium (Mg) content of 2.2 mass% or more and 2.8 mass% or less.

FIG. 1

FIG. 2

FIG. 3

## INTERNATIONAL SEARCH REPORT

| | |
|---|---|
| International application No. | |
| | **PCT/JP2024/015128** |

**A. CLASSIFICATION OF SUBJECT MATTER**

*C22C 21/06*(2006.01)i; *C22F 1/00*(2006.01)n; *C22F 1/047*(2006.01)n
FI: C22C21/06; C22F1/00 602; C22F1/00 613; C22F1/00 623; C22F1/00 630A; C22F1/00 630B; C22F1/00 630K;
C22F1/00 673; C22F1/00 681; C22F1/00 682; C22F1/00 683; C22F1/00 684C; C22F1/00 685Z; C22F1/00 686A;
C22F1/00 691B; C22F1/00 691C; C22F1/00 694A; C22F1/00 694B; C22F1/047

According to International Patent Classification (IPC) or to both national classification and IPC

**B. FIELDS SEARCHED**

Minimum documentation searched (classification system followed by classification symbols)
C22C21/00-21/18; C22F1/00; C22F1/04-1/057

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-70925 A (SKY ALUM CO., LTD.) 18 March 1997 (1997-03-18) paragraphs [0014]-[0021], [0027]-[0028] | 1-6 |
| A | JP 4-221036 A (SKY ALUM CO., LTD.) 11 August 1992 (1992-08-11) paragraphs [0057]-[0062] | 1-6 |
| A | JP 2013-23757 A (SUMITOMO LIGHT METAL INDUSTRIES LTD.) 04 February 2013 (2013-02-04) paragraphs [0037]-[0054] | 1-6 |
| A | JP 2002-514269 A (GOLDEN ALUMINUM COMPANY) 14 May 2002 (2002-05-14) p. 45, line 7 to p. 57, line 7 | 1-6 |
| A | JP 60-258454 A (THE FURUKAWA ELECTRIC CO., LTD.) 20 December 1985 (1985-12-20) p. 1, right column, lines 2-4, tables 1-4 | 1-6 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2024** | **25 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2024/015128** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2022/233577 A1 (CONSTELLIUM NEUF-BRISACH) 10 November 2022 (2022-11-10) p. 7, lines 29-30, tables 1-2 | 1-6 |
| P, A | WO 2023/171576 A1 (UACJ CORP.) 14 September 2023 (2023-09-14) claims, paragraphs [0087]-[0100] | 1-6 |

Form PCT/ISA/210 (second sheet) (July 2022)

## INTERNATIONAL SEARCH REPORT
### Information on patent family members

International application No.

**PCT/JP2024/015128**

| Patent document cited in search report | | | Publication date (day/month/year) | Patent family member(s) | | | Publication date (day/month/year) |
|---|---|---|---|---|---|---|---|
| JP | 9-70925 | A | 18 March 1997 | (Family: none) | | | |
| JP | 4-221036 | A | 11 August 1992 | (Family: none) | | | |
| JP | 2013-23757 | A | 04 February 2013 | (Family: none) | | | |
| JP | 2002-514269 | A | 14 May 2002 | US | 2003/0173003 | A1 | |
| | | | | paragraphs [0221]-[0236] | | | |
| | | | | AU | 7716298 | A | |
| | | | | CA | 2293608 | A1 | |
| | | | | EP | 996761 | A1 | |
| | | | | WO | 1998/055663 | A1 | |
| JP | 60-258454 | A | 20 December 1985 | (Family: none) | | | |
| WO | 2022/233577 | A1 | 10 November 2022 | BR | 112023021185 | A2 | |
| | | | | CN | 117280060 | A | |
| | | | | DE | 22723453 | T1 | |
| | | | | EP | 4334486 | A1 | |
| | | | | FR | 3122666 | A1 | |
| | | | | JP | 2024-517781 | A | |
| | | | | KR | 10-2024-0004906 | A | |
| WO | 2023/171576 | A1 | 14 September 2023 | JP | 2023-131622 | A | |

Form PCT/ISA/210 (patent family annex) (July 2022)

**REFERENCES CITED IN THE DESCRIPTION**

**Patent documents cited in the description**

- JP 2023067405 A

- JP H5263175 A